(19) Europäisches Patentamt
European Patent Office
Office européen des brevets

(11) EP 1 898 352 B1

(12) **EUROPÄISCHE PATENTSCHRIFT**

(45) Veröffentlichungstag und Bekanntmachung des Hinweises auf die Patenterteilung:
**03.11.2010 Patentblatt 2010/44**

(51) Int Cl.:
***G06T 3/40*** *(2006.01)*

(21) Anmeldenummer: **07015325.9**

(22) Anmeldetag: **04.08.2007**

(54) **Verfahren und Vorrichtung zur Erhöhung der Auflösung einer Datenfolge**

Method and device for increasing the resolution of a data sequence

Procédé et dispositif destinés à l'augmentation de la résolution d'une suite de données

(84) Benannte Vertragsstaaten:
**DE FR GB**

(30) Priorität: **08.09.2006 DE 102006042180**

(43) Veröffentlichungstag der Anmeldung:
**12.03.2008 Patentblatt 2008/11**

(73) Patentinhaber: **Trident Microsystems (Far East) Ltd.**
**Grand Cayman (KY)**

(72) Erfinder: **Hahn, Marco**
**85579 Neubiberg (DE)**

(74) Vertreter: **Epping - Hermann - Fischer**
**Patentanwaltsgesellschaft mbH**
**Ridlerstrasse 55**
**80339 München (DE)**

(56) Entgegenhaltungen:
**EP-A- 1 164 568** **EP-A- 1 587 319**
**US-A1- 2005 030 424**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 1 898 352 B1

## Beschreibung

Die vorliegende Erfindung betrifft ein Verfahren und eine Vorrichtung zur Erhöhung der Auflösung einer Datenfolge, also zur Erzeugung einer zweiten Datenfolge aus einer ersten Datenfolge, wobei die zweite Datenfolge eine höhere Auflösung bzw. eine höhere Datenrate als die erste Datenfolge besitzt.

Eine solche Datenfolge erhöhter Auflösung kann zu einer gegebenen Datenfolge dadurch erzeugt werden, dass zwischen aufeinanderfolgenden Datenwerten der gegebenen Datenfolge Zwischenwerte interpoliert werden. Eine solche Interpolation von Zwischenwerten kann sowohl bei Datenfolgen mit zeitlich aufeinanderfolgenden Datenwerten, als auch bei Datenfolgen mit örtlich aufeinanderfolgenden Datenwerten angewendet werden. Eine Datenfolge mit örtlich aufeinanderfolgenden Datenwerte kommt beispielsweise in digitalen Videobildern vor, in denen Bildpunkte matrixartig angeordnet sind. Die Bildpunktwerte von Bildpunkten, die in vertikaler Richtung oder in horizontaler Richtung des Bildes benachbart zueinander angeordnet sind, bilden jeweils eine Datenfolge mit örtlich aufeinanderfolgenden Datenwerte, wobei die Datenwerte durch die Bildpunktwerte repräsentiert sind.

Eine Interpolation von Zwischenwerten zwischen gegebenen Bildpunktwerten ist in der Bildverarbeitung beispielsweise dann erforderlich, wenn aus einem Halbbild, zu dem Bildpunktwerte nur für jede zweite Zeile der Bildpunktmatrix vorliegen, ein Vollbild generiert werden soll, das Bildpunktwerte für alle Bildzeilen des Bildes umfasst. Eine Datenfolge, deren Auflösung zu erhöhen ist, ist in diesem Fall eine Datenfolge, die eine Folge von Bildpunktwerten umfasst, die zu Bildpunkten gehören, die in vertikaler Richtung des Halbbildes übereinanderliegend angeordnet sind.

Eine Interpolation von Zwischenwerten ist in der Bildverarbeitung auch dann erforderlich, wenn die Bildauflösung entweder eines Bildausschnitts beim sogenannten Zoomen oder wenn die Bildauflösung des gesamten Bildes vergrößert werden soll.

Eine Interpolation solcher Zwischenwerte zu einer gegebenen Datenfolge kann beispielsweise dadurch erreicht werden, dass zwischen zwei aufeinanderfolgenden Datenwerten der gegebenen Datenfolge jeweils wenigstens ein zusätzlicher Datenwert, beispielsweise Null, eingefügt wird und dass auf die so erhaltene Folge anschließend eine Tiefpassfilterung angewendet wird.

Herkömmliche diskrete Tiefpassfilter besitzen Filterkoeffizienten, die sich als Abtastwerte einer si(x)-Funktion (mit si(x) = sin(x/x)) ergeben. Die si(x)-Funktion ist eine unendliche ausgedehnte Funktion, während das diskrete Filter nur eine endliche Anzahl von Filterkoeffizienten besitzen kann, so dass derart realisierte Tiefpassfilter kein ideales Filterverhalten besitzen.

Wünschenswert für die Bildverarbeitung ist insbesondere ein Filter, das Signalsprünge in der ursprünglichen Datenfolge möglichst unverfälscht auf die Datenfolge erhöhter Auflösung abbildet. Solche Signalsprünge in Datenfolgen, die aus einem digitalen Videobild resultieren, repräsentieren Kanten in dem Bild, an denen entweder eine sprunghafte Helligkeitsänderung oder sprunghafte Farbänderung vorliegt. Bei Verwendung herkömmlicher Tiefpassfilter führen solche Signalsprünge in der ursprünglichen Datenfolge in der interpolierten Datenfolge im Bereich des Signalsprungs zu Über- und Unterschwingern. Die interpolierte Datenfolge enthält im Bereich des Signalsprungs also Datenwerte die kleiner als die Datenwerte der ursprünglichen Datenfolge sind und Datenwerte, die größer als die Datenwerte der ursprünglichen Datenfolge sind. Solche Über- und Unterschwinger im Bereich von Bildkanten werden durch den Betrachter gewöhnlich als unangenehm wahrgenommen.

Aufgabe der vorliegenden Erfindung ist es, ein Verfahren zur Erhöhung der Auflösung einer Datenfolge zur Verfügung zu stellen, das einfach und kostengünstig realisierbar ist und das insbesondere Signalsprünge in der ursprünglichen Datenfolge wenigstens annähernd ohne Über- und Unterschwinger auf Signalsprünge in der Datenfolge erhöhter Auflösung abbildet, und eine Vorrichtung zur Durchführung eines solchen Verfahrens zur Verfügung zu stellen.

Diese Aufgabe wird durch ein Verfahren nach Anspruch 1 und durch eine Filteranordnung nach Anspruch 9 gelöst.

Vorteilhafte Ausgestaltungen der Erfindung sind Gegenstand der Unteransprüche.

Das erfindungsgemäße Verfahren zur Erzeugung aus einer ersten Datenfolge mit einer Folge von Datenwerten eine zweite Datenfolge mit einer im Vergleich zu der ersten Datenfolge höheren Auflösung sieht vor, aus der ersten Datenfolge eine Zwischenfolge durch Einfügen wenigstens eines vorgegebenen Zwischenwertes zwischen jeweils zwei aufeinanderfolgenden Datenwerten der ersten Datenfolge zu erzeugen und auf die so erhaltene Zwischenfolge eine Filterung zur Erzeugung der zweiten Datenfolge anzuwenden. Diese Filterung umfasst zur Erzeugung eines jeden Datenwertes der zweiten Datenfolge die Verfahrensschritte:

a) Anwenden einer Tiefpassfilterung auf wenigstens zwei Datenwerte der Zwischenfolge, von denen wenigstens einer in der Zwischenfolge vor einem gegebenen Datenwert liegt und von denen wenigstens einer in der Zwischenfolge nach dem gegebenen Datenwert liegt, zur Bereitstellung eines Tiefpassfilterwertes,

b) Anwenden wenigstens einer ersten Hochpassfilterung auf wenigstens zwei Datenwerte der Zwischenfolge, die in der Zwischenfolge nach dem gegebenen Datenwert liegen zur Bereitstellung wenigstens eines ersten Hochpassfilterwertes,

c) Anwenden wenigstens einer zweiten Hochpassfilterung auf wenigstens zwei Datenwerte der Zwischenfolge, die in der Zwischenfolge vor dem gegebenen Datenwert liegen, zur Bereitstellung wenigstens eines zweiten Hochpassfilterwertes,

d) Anwenden einer Rangfolgefilterung wenigstens auf den wenigstens einen ersten Hochpassfilterwert und den wenigstens einen zweiten Hochpassfilterwert zur Bereitstellung eines Rangfolgefilterwertes, und

e) Verknüpfen des Tiefpassfilterwertes und des Rangfolgefilterwertes zur Bereitstellung des Datenwertes der zweiten Datenfolge.

Bei einer Ausführungsform ist vorgesehen, dass der Rangfolgefilterung außer dem wenigstens einen ersten Hochpassfilterwert und dem wenigstens einen zweiten Hochpassfilterwert ein vorgegebener konstanter Wert, beispielsweise Null, zugeführt wird.

Die Rangfolgefilterung ist beispielsweise eine Medianfilterung, die den Median der zu filternden Werte ausgibt. Die Rangfolgefilterung kann jedoch auch eine Maximalwert- oder Minimalwertfilterung sein, die den Maximalwert der zugeführten zu filternden Werte bzw. den Minimalwert der zugeführten zu filternden Werte ausgibt.

Die erfindungsgemäße Filteranordnung zur Filterung einer Datenfolge umfasst eine Speicheranordnung zur Speicherung einer ersten Gruppe mit wenigstens zwei Datenwerten, die in der Datenfolge vor einem ersten Datenwert liegen, und zur Speicherung einer zweiten Gruppe von wenigstens zwei Datenwerten, die in der Datenfolge nach dem ersten Datenwert liegen. Die Filteranordnung umfasst außerdem ein Tiefpassfilter, dem wenigstens ein Datenwert der ersten Gruppe und dem wenigstens ein Datenwert der zweiten Gruppe zugeführt ist und der einen Tiefpassfilter bereitstellt, wenigstens ein erstes Hochpassfilter, dem wenigstens zwei Datenwerte der ersten Gruppe zugeführt sind das wenigstens einen ersten Hochpassfilterwert bereitstellt, und wenigstens ein zweites Hochpassfilter, dem wenigstens zwei Datenwerte der zweiten Datengruppe zugeführt sind und das wenigstens einen zweiten Hochpassfilterwert bereitstellt. Die Filteranordnung umfasst zudem ein Rangfolgefilter, dem der wenigstens eine Hochpassfilterwert und der wenigstens eine zweite Hochpassfilterwert zugeführt sind und das abhängig von diesen Filterwerten einen Rangfolgefilterwert bereitstellt, und eine Verknüpfungseinheit zur Verknüpfung des Rangfolgefilterwertes mit dem Tiefpassfilter und zur Bereitstellung eines Ausgangswertes der Filteranordnung.

Die vorliegende Erfindung wird nachfolgend anhand von Figuren näher erläutert.

Figur 1 veranschaulicht eine Datenfolge mit aufeinanderfolgenden Datenwerten sowie eine aus dieser Datenfolge durch Einfügen konstanter Zwischenwerte erzeugte Zwischenfolge.

Figur 2 zeigt ein Ausführungsbeispiel einer erfindungsgemäßen Filteranordnung zur Erläuterung des erfindungsgemäßen Verfahrens.

Figur 3 veranschaulicht in einem Signaldiagramm eine Ausgangsdatenfolge, eine aus der Ausgangsdatenfolge erzeugte Zwischenfolge, eine mittels des erfindungsgemäßen Verfahrens erzeugte Signalfolge sowie eine mittels des erfindungsgemäßen Verfahrens erzeugte Signalfolge erhöhter Auflösung.

Figur 4 zeigt ein weiteres Ausführungsbeispiel einer erfindungsgemäßen Filteranordnung.

In den Figuren bezeichnen, sofern nicht anders angegeben, gleiche Bezugszeichen gleiche Schaltungskomponenten und Signale mit gleicher Bedeutung.

Figur 1 zeigt beispielhaft eine Signalfolge a'[k] mit einer Folge von Datenwerten, die in Figur 1 über dem Laufindex k aufgetragen sind. Diese Datenwerte können zeitlich aufeinanderfolgende Datenwerte sein, der Index k repräsentiert dann eine zeitliche Variable. Die Datenwerte können jedoch auch räumlich aufeinanderfolgende Datenwerte sein, der Index k repräsentiert dann eine örtliche Variable. Örtlich aufeinanderfolgende Datenwerte sind beispielsweise Bildpunktwerte, wie beispielsweise Luminanzwerte oder Chrominanzwerte, von Bildpunkten eines matrixartig aufgebauten Videobildes.

Ziel der vorliegenden Erfindung ist es, aus einer solchen Datenfolge a'[k] eine Datenfolge mit höherer Auflösung bzw. einer höheren Datenrate zu erzeugen. Bezugnehmend auf Figur 1 wird aus der Eingangsdatenfolge a'[k] hierzu eine Zwischenfolge a[k] erzeugt, die die Datenwerte der Eingangsfolge a'[k] und wenigstens einen konstanten Zwischenwert zwischen jeweils zwei aufeinanderfolgenden Datenwerten der Eingangsfolge a'[k] umfasst. Diese Zwischenwerte sind beispielsweise Null und in Figur 1 durch Kreuze dargestellt. Die Kreise im zeitlichen Verlauf der Zwischenfolge a [k] symbolisieren die Datenwerte der Eingangsfolge a'[k].

Diese Zwischenfolge a[k] wird anschließend gefiltert, um eine gefilterte Signalfolge s[k] zu erzeugen, die zumindest an den Positionen der konstanten Zwischenwerte der Zwischenfolge a[k] interpolierte Zwischenwerte aufweist. Diese Filterung wird nachfolgend anhand von Figur 2 erläutert.

Figur 2 zeigt schematisch eine mögliche Filteranordnung zur Filterung der Zwischenfolge a[k] zur Erzeugung der gefilterten Datenfolge s[k]. Die Filteranordnung umfasst eine Speicheranordnung 20 zur Speicherung einer Anzahl aufeinanderfolgender Datenwerte der Zwischenfolge a[k]. Diese Speicheranordnung 20 ist beispielsweise ein Schieberegister, das bezugnehmend auf Figur 2 durch eine Folge getakteter Verzögerungsglieder 21-26 realisiert werden kann.

Die Speicheranordnung speichert eine Anzahl aufeinanderfolgender Datenwerte der Datenfolge a[k], auf welche die Filterung angewendet wird. Die in dem Beispiel dargestellte Speicheranordnung 20 umfasst sechs Verzögerungsglieder 21 bzw. Speicherelemente, so dass einschließlich eines am Eingang des Speichers 20 anliegenden aktuellen Datenwertes der Datenfolge a[k] in dem dargestellten Beispiel sieben Datenwerte zur Filterung zur Verfügung stehen. Diese Datenwerte sind mit a[i-3] ... a[i+3] bezeichnet. a[i] bezeichnet in Figur 2 einen Datenwert der Zwischenfolge a[k], zu dem während eines Verarbeitungszyklus der Filteranordnung jeweils ein an einem Ausgang der Filteranordnung zur Verfügung stehender gefilterter Signalwert s[i] erzeugt wird. Die dargestellte Filteranordnung verarbeitet die einzelnen Datenwerte der Zwischenfolge a[k] aufeinanderfolgend, wobei in jedem Verarbeitungszyklus ein gefilterter Signalwert s[i] zu einem Datenwert a[i] der Zwischenfolge a[k] erzeugt wird. Die dargestellte Speicheranordnung ist als FIFO-Speicher realisiert, so dass die abgespeicherten Datenwerte nach jedem Verarbeitungszyklus der Filteranordnung um eine Speicherposition verschoben werden, so dass beispielsweise der Datenwert a[i-1] an die Stelle des Datenwertes a[i] rückt usw. Gleichzeitig wird ein neuer Datenwert im Speicher 20 abgespeichert, während ein bis dahin am längsten gespeicherter Wert aus dem Speicher heraus fällt.

Der Datenwert a[i], zu dem während eines Verarbeitungszyklus der Filteranordnung ein gefilterter Wert s[i] erzeugt wird, wird nachfolgend als aktueller Wert bzw. gegebener Datenwert bezeichnet. Datenwerte a[i-1], a[i-2], a[i-3], die vor dem aktuellen Datenwert a[i] in den Speicher 20 geschrieben wurden und die damit in der Datenfolge vor dem aktuellen Datenwert a[i] liegen, bilden eine erste Gruppe von Datenwerten, während Datenwerte a[i+1], a[i+2], a [i+3], die nach dem aktuellen Datenwert a[i] in den Speicher geschrieben wurden und die damit in der Datenfolge a[k] nach dem aktuellen Datenwert liegen, eine zweite Gruppe von Datenwerten bilden. Die relative Position des aktuellen Datenwertes a[i] in der Zwischenfolge a[k] bezogen auf die Positionen der Datenwerte der ersten und zweiten Gruppe ist in Figur 1 beispielhaft dargestellt. Unter der Annahme, dass die Variable k eine zeitliche Variable darstellt und dass die Datenwerte von links nach rechts in zeitlich aufsteigender Folge dargestellt sind, liegen die Datenwerte der ersten Gruppe in der Signaldarstellung rechts von dem aktuellen Datenwert a[i], während die Datenwerte der zweiten Gruppe links von dem aktuellen Datenwert liegen.

Wenigstens ein Datenwert der ersten Gruppe, ein Datenwert der zweiten Gruppe, und in dem Beispiel auch der aktuelle Datenwert a[i], werden mittels eines Tiefpassfilters 10 zur Bereitstellung eines Tiefpassfilterwertes tp[i] tiefpassgefiltert. Die der Tiefpassfilterung unterzogenen Datenwerte der ersten und zweiten Gruppe liegen in dem Beispiel symmetrisch zu dem aktuellen Datenwert a[i] und sind in dem Beispiel Datenwerte a[i-1], a[i+1], die in der Datenfolge unmittelbar vor und unmittelbar nach dem aktuellen Datenwert a[i] angeordnet sind.

Außerdem werden wenigstens zwei Datenwerte der ersten Gruppe durch ein erstes Hochpassfilter 31 hochpassgefiltert, um einen ersten Hochpassfilterwert hp1[i] zu erzeugen, und wenigstens zwei Datenwerte der zweiten Gruppe werden mittels eines zweiten Hochpassfilters 32 hochpassgefiltert, um einen zweiten Hochpassfilterwert hp2[i] zu erzeugen. Die hochpassgefilterten Datenwerte der ersten Gruppe und die hochpassgefilterten Datenwerte der zweiten Gruppe liegen in der Datenfolge jeweils symmetrisch zu dem aktuellen Datenwert a[i]. In dem dargestellten Beispiel liegen die hochpassgefilterten Datenwerte bezogen auf die Position des aktuellen Datenwertes a[i] jeweils an ungeradzahligen Positionen. So liegen die der Hochpassfilterung unterzogenen Datenwerte a[i-1], a[i-3] der ersten Gruppe an erster und dritter Stelle vor dem aktuellen Datenwert a[i] während die der Hochpassfilterung unterzogenen Datenwerte a[i+1], a[i+3] der zweiten Gruppe an erster und dritter Position nach dem aktuellen Datenwert a[i] liegen.

Der erste und zweite Hochpassfilterwert hp1[i], hp2[i] werden in der Rangfolgefilterung durch ein Rangfolgefilter 40 unterzogen. Optional kann diesem Rangfolgefilter außer den beiden Hochpassfilterwerten hp1[i], hp2[i] zusätzlich ein konstanter Eingangswert, beispielsweise Null zugeführt werden, der bei der Filterung berücksichtigt wird. Das Rangfolgefilter 40 ist beispielsweise ein Medianfilter, ein Minimalfilter oder Maximalfilter und stellt aus den ihm zugeführten Eingangswerten, in dem Beispiel hp1[i], Null und hp2[i] einen Rangfolgefilterwert hp[i] zur Verfügung. Der Tiefpassfilterwert tp[i] und der Rangfolgefilter hp[i] werden verknüpft, beispielsweise mittels eines Addieres 50, um dadurch den gefilterten Signalwert s[i] zu erzeugen.

Bei einer Ausführungsform der Erfindung ist vorgesehen, dass die Hochpassfilter 31, 32 gleiche Filterkoeffizienten besitzen und dass Datenwerte der ersten und zweiten Gruppe, die gleiche Abstände zu dem aktuellen Datenwert a[i] haben in den beiden Hochpassfiltern 31, 32 in gleicher Weise für die Erzeugung des ersten und zweiten Hochpassfilterwertes hp1[i], hp2 [i] gewichtet werden. Diese Filterkoeffizienten sind beispielsweise so gewählt, dass gilt:

$$hp1[i] = 1/8 \cdot (a[i-1] - a[i-3]) \qquad (1a)$$

$$hp2[i] = 1/8 \cdot (a[i+1] - a[i+3]). \qquad (1b)$$

Die Datenwerte a[i-1] und a[i+1], die jeweils einen gleichen Abstand zu dem aktuellen Datenwert a[i] besitzen werden hierbei mit 1/8 gewichtet, während die Datenwerte a[i-3] und a[i+3], die gleichen Abstand zu dem aktuellen Datenwert a[i] besitzen, mit -1/8 gewichtet werden.

Für den Tiefpassfilterwert gilt beispielsweise:

$$tp[i] = 1/2 \cdot [2 \cdot a[i] + (a[i-1] + a[i+1])]. \qquad (2)$$

Außer den zuvor genannten sehr einfachen Filterfunktionen können beliebige Hochpassfilterfunktionen und Tiefpassfilterfunktionen zur Realisierung des erfindungsgemäßen Filterverfahrens angewendet werden. Hochpassfilter zeichnen sich bekanntlich dadurch aus, dass die Summe von deren Filterkoeffizienten gleich Null ist, während die Summe der Filterkoeffizienten eines Tiefpassfilters ungleich Null ist.

Die Filterkoeffizienten für das Tiefpassfilter 10 sowie die beiden Hochpassfilter 31, 32 können in nachfolgend erläuterter Weise aus den Filterkoeffizienten eines diskreten Tiefpassfilters abgeleitet werden, dessen Filterkoeffizienten Abtastwerte einer Funktion si(x) sind. Betrachtet sei beispielsweise ein Tiefpassfilter sechster Ordnung mit einer Übertragungsfunktion

$$G[z] = 1/16 \cdot [8z^{-3} + 5(z^{-2} + z^{-4}) - (z^{0} + z^{-6})]. \qquad (3)$$

Angewendet auf eine Datenfolge, beispielsweise die Zwischenfolge a[k] ergibt sich für einen durch dieses Tiefpassfilter erzeugten Filterwert:

$$ga[i] = 1/8 \cdot [8a[i]+5(a[i-1]+a[i+1])-(a[i-3] + a[i+3])] \qquad (4)$$

wobei a[i-3]...a[i+3] Datenwerte der Datenfolge a[k] bezeichnen.

Diese zeitliche Darstellung der Übertragungsfunktion lässt sich in einen ersten Hochpassanteil entsprechend Gleichung (1a) zerlegen, der nur Datenwerte vor dem Datenwert a[i] betrifft, in einen zweiten Hochpassanteil entsprechend Gleichung (1b) zerlegen, der nur Datenwerte nach dem Datenwert a[i] betrifft, und in einen Tiefpassanteil entsprechend Gleichung (2) zerlegen.

Selbstverständlich sind auch komplexere Hochpassfilterfunktionen anwendbar, so gilt beispielsweise für den durch das erste Hochpassfilter 31 erzeugten ersten Hochpassfilterwert hp1[i] und den durch das zweite Hochpassfilter erzeugten zweiten Hochpassfilterwert hp2[i]:

$$hp1[i] = 1/64 \cdot (7a[i-1] - 9a[i-3] + 2a[i-5]) \qquad (5a)$$

$$hp2[i] = 1/64 \cdot (7a[i+1] - 9a[i+3] - 2a[i+5]). \qquad (5b)$$

Diese ersten und zweiten Hochpassfilterungen gemäß der Gleichungen (5a) und (5b) sowie die Tiefpassfilterung gemäß Gleichung (2) lassen sich in grundsätzlich bereits erläuterter Weise aus dem diskreten Tiefpassfilter mit der Übertragungsfunktion

$$G[z] = 1/128 \cdot [64z^{-5}+39 \cdot (z^{-4}+z^{-6})-9 \cdot (z^{-2}+z^{-8})+2 \cdot (z^{0}+z^{-10})] \qquad (6)$$

ableiten.

Bezugnehmend auf Figur 3 besteht bei dem erfindungsgemäßen Filterverfahren bzw. der erfindungsgemäßen Filteranordnung auch die Möglichkeit, die erste und zweite Gruppe von Datenwerten jeweils mehreren Hochpassfilterungen zu unterziehen, um dadurch mehrere erste Hochpassfilterwerte hp11[i], hp12[i], hp13[i] und mehrere zweite Hochpassfilterwerte hp21[i], hp22[i], hp23[i] zu unterziehen. Diese Hochpassfilterwerte werden einer Rangfolgefilterung mittels eines Rangefolgefilters 40 unterzogen, wobei dem Rangfolgefilter ein zusätzlicher konstanter Eingangswert, beispielsweise Null zugeführt werden kann. Am Ausgang dieses Rangfolgefilters steht ein Rangfolgefilterwert zur Verfügung, der von den zugeführten ersten und zweiten Hochpassfilterwerten sowie gegebenenfalls dem konstanten Eingangswert abhängig ist. Dieser Rangfolgefilterwert wird - beispielsweise durch eine Addition - mit dem Tiefpassfilterwert tp[i] verknüpft.

In nicht näher dargestellter Weise können beispielsweise zwei erste Hochpassfilterungen durchgeführt werden, von denen eine der Gleichung (1a) und die andere der Gleichung (5a) genügt. Entsprechend können zwei zweite Hochpassfilterungen durchgeführt werden, von denen eine erste der Gleichung (1b) und eine andere der Gleichung (5b) genügt.

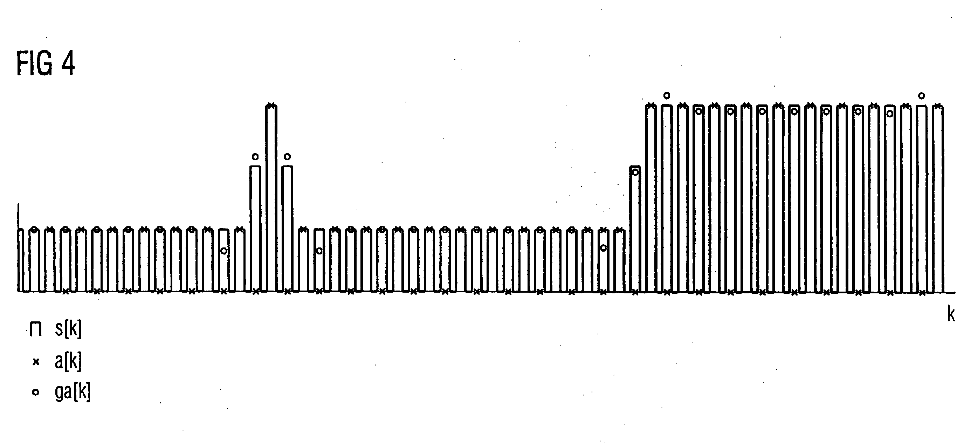

Zur Veranschaulichung der Funktionsweise des erfindungsgemäßen Verfahrens zeigt Figur 4 eine Zwischenfolge a[k] und eine aus der Zwischenfolge durch Anwendung des erfindungsgemäßen Verfahrens erhaltene gefilterte Datenfolge s[k]. Die in Figur 4 im Ergebnis dargestellte Filterung basiert auf einer Tiefpassfilterung gemäß Gleichung (2) sowie zwei ersten und zwei zweiten Hochpassfilterungen gemäß der Gleichungen (1a), (1b), (5a) und (5b). Die Rangfolgefilterung wird hierbei auf die vier erhaltenen Hochpassfilterwerte sowie den Wert Null als fünften Filtereingangswert des Rangfolgefilters angewendet.

Im Vergleich dazu sind in Figur 4 an den Positionen der Zwischenwerte der Zwischenfolge a[k] interpolierte Datenwerte dargestellt, die durch Filterung der Zwischenfolge a[k] unter Verwendung eines diskreten Tiefpassfilters mit einer Übertragungsfunktion gemäß Gleichung (6) dargestellt. Insbesondere im Bereich des Signalsprungs der Zwischenfolge a[k] bzw. der ursprünglichen Datenfolge, auf welcher die Zwischenfolge beruht, führt die Filterung mit dem diskreten Tiefpassfilter zu Überschwingern, die bei Anwendung des erfindungsgemäßen Verfahrens vermieden werden.

**Patentansprüche**

1. Verfahren zur Erzeugung aus einer ersten Datenfolge (a'[k]) mit einer Folge von Datenwerten eine zweite Datenfolge (s[k]) mit einer im Vergleich zu der ersten Datenfolge (a[k]) höheren Auflösung, das die Verfahrensschritte aufweist:

   Erzeugen einer Zwischenfolge (a[k]) aus der ersten Datenfolge (a'[k]) durch Einfügen wenigstens eines vorgegebenen Zwischenwertes zwischen jeweils zwei aufeinanderfolgenden Datenwerten der ersten Datenfolge (a'[k]),
   Anwenden einer Filterung auf die Zwischenfolge (a[k]) zur Erzeugung der zweiten Datenfolge, wobei diese Filterung zur Erzeugung eines Datenwertes (s[i]) der zweiten Datenfolge (s[k]) die Verfahrensschritte aufweist:

   a) Anwenden einer Tiefpassfilterung auf wenigstens zwei Datenwerte (a[i-1], a[i], a[i+1]) der Zwischenfolge (a[k]), von denen wenigstens einer (a[i+1]) in der Zwischenfolge (a[k]) vor einem gegebenen Datenwert (a[i]) liegt und von denen wenigstens einer (a[i-1]) in der Zwischenfolge (a[k]) nach dem gegebenen Datenwert liegt, zur Bereitstellung eines Tiefpassfilterwertes (tp[i]),
   b) Anwenden wenigstens einer ersten Hochpassfilterung auf wenigstens zwei Datenwerte (a[i-1], (a[i-3]) der Zwischenfolge, die in der Zwischenfolge (a[k]) vor dem gegebenen Datenwert liegen, zur Bereitstellung wenigstens eines ersten Hochpassfilterwertes (hp1[i]),
   c) Anwenden wenigstens einer zweiten Hochpassfilterung auf wenigstens zwei Datenwerte (a[i+1], (a[i+3]) der Zwischenfolge, die in der Zwischenfolge (a[k]) nach dem gegebenen Datenwert liegen, zur Bereitstellung wenigstens eines zweiten Hochpassfilterwertes (hp2[i]),
   d) Anwenden einer Rangfolgefilterung wenigstens auf den wenigstens einen ersten Hochpassfilterwert (hp1[i]) und den wenigstens einen zweiten Hochpassfilterwert (hp2[i]), zur Bereitstellung eines Rangfolgefilterwertes (hp[i]),
   e) Verknüpfen des Tiefpassfilterwertes (tp[i]) und des Rangfolgefilterwertes zur Bereitstellung des Datenwertes (s[i]) der zweiten Datenfolge.

2. Verfahren nach Anspruch 1, bei dem die Rangfolgefilterung auf den wenigstens einen ersten Hochpassfilterwert (hp1[i]), den wenigstens einen zweiten Hochpassfilterwert (hp2[i]) und einen vorgegebenen konstanten Wert angewendet wird.

3. Verfahren nach Anspruch 2, bei dem der konstante Wert Null ist.

4. Verfahren nach einem der vorangehenden Ansprüche, bei dem die Rangfolgefilterung eine Medianfilterung ist.

**5.** Verfahren nach einem der vorangehenden Ansprüche, bei dem die wenigstens zwei Datenwerte (a[i-1], a[i], a[i+1]) in Schritt a) den gegebenen Datenwert umfassen.

**6.** Verfahren nach einem der vorangehenden Ansprüche, bei dem wenigstens zwei erste Hochpassfilterungen und wenigsten zwei zweite Hochpassfilterungen durchgeführt werden.

**7.** Verfahren nach einem der vorangehenden Ansprüche, bei dem die Verknüpfung in Schritt e) eine Addition umfasst.

**8.** Verfahren nach einem der vorangehenden Ansprüche, bei dem die Verfahrensschritte a) bis e) für alle aufeinanderfolgenden Datenwerte der Zwischenfolge (a[k]) durchgeführt werden.

**9.** Filteranordnung zur Filterung einer Datenfolge (a[k]), die aufweist:

eine Speicheranordnung (20) zur Speicherung eines ersten Datenwertes (a[i]) der Datenfolge, zur Speicherung einer ersten Gruppe mit wenigstens zwei Datenwerten (a[i+1], a[i+2, a[i+3]), die in der Datenfolge (a[k]) vor dem ersten Datenwert (a[i]) liegen, und zur Speicherung einer zweiten Gruppe von wenigstens zwei Datenwerten (a[i-1], a[i-2], a[i-3]), die in der Datenfolge (a[k]) nach dem ersten Datenwert (a[i]) liegen,
ein Tiefpassfilter (10), dem wenigstens ein Datenwert der ersten Gruppe und dem wenigstens ein Datenwert der zweiten Gruppe zugeführt ist und der einen Tiefpassfilterwert (tp[i]) bereitstellt,
wenigstens ein erstes Hochpassfilter (21), dem wenigstens zwei Datenwerte der ersten Gruppe zugeführt sind und das wenigstens einen ersten Hochpassfilterwert (hp1[i]) bereitstellt,
wenigstens ein zweites Hochpassfilter (22), dem wenigstens zwei Datenwerte der zweiten Gruppe zugeführt sind und das wenigstens einen zweiten Hochpassfilterwert (hp2[i]) bereitstellt,
ein Rangfolgefilter (40), dem der wenigstens eine erste Hochpassfilterwert (hp1[i]) und der wenigstens eine zweite Hochpassfilterwert (hp2[i]) zugeführt sind und das abhängig von diesen Filterwerten einen Rangfolgefilterwert bereitstellt,
eine Verknüpfungseinheit (50) zur Verknüpfung des Rangfolgefilterwertes (hp[i]) mit dem Tiefpassfilterwert und zur Bereitstellung eines Ausgangswertes (s[k]) der Filteranordnung.

**10.** Filteranordnung nach Anspruch 9, bei der dem Tiefpassfilter (10) der gegebene Datenwert zugeführt ist.

**11.** Filteranordnung nach Anspruch 9 oder 10, bei der dem Rangfolgefilter (40) zusätzlich zu dem wenigstens einen ersten Hochpassfilterwert (hp1[i]) und dem wenigstens einen zweiten Hochpassfilterwert (hp2[i]) ein konstanter Datenwert zugeführt ist.

## Claims

**1.** A method of generating a second data sequence (s[k]) from a first data sequence (a'[k]) comprising a sequence of data values, the second data sequence having a higher resolution than the first data sequence (a'[k]), the method comprising the steps of:

generating an intermediate sequence (a[k]) from the first data sequence (a'[k]) by inserting at least one predetermined intermediate value between two successive data values of the first data sequence (a'[k]),
applying a filtering process to the intermediate sequence (a[k]) for generating the second data sequence, this filtering process for generating a data value (s[i]) of the second data sequence (s[k]) comprising the steps of:

a) applying a low-pass filtering process to at least two data values (a[i-1], a[i], a[i+1]) of the intermediate sequence (a[k]), these data values comprising at least one data value [a[i+1]) in the intermediate sequence (a[k]) which is located ahead of a given data value (a[i]) and at least one data value (a[i-1]) in the intermediate sequence (a[k]) which is located after the given data value, to provide a low-pass filter value (tp[i]),
b) applying at least one first high-pass filtering process to at least two data values (a[i-1], a[i-3]) of the intermediate sequence, which in the intermediate sequence (a[k]) are located ahead of the given data value, to provide at least one first high-pass filter value (hp1[i]),
c) applying at least one second high-pass filtering process to at least two data values (a[i+1], a[i+3]) of the intermediate sequence, which in the intermediate sequence (a[k]) are located after the given data value, to provide at least one second high-pass filter value (hp2[i]),
d) applying a ranking filtering process at least to the at least one first high-pass filter value (hp1[i]) and the at least one second high-pass filter value (hp2[i]), to provide a ranking filter value (hp[i]),
e) combining the low-pass filter value (tp[i]) and the ranking filter value to provide the data value (s[i]) of the second data sequence.

**2.** The method according to claim 1, wherein the ranking filtering process is applied to the at least one first high-pass filter value (hp1[i]), the at least one second high-pass filter value (hp2[i]) and a predetermined constant value.

**3.** The method according to claim 2, wherein the constant value is zero.

**4.** The method according to any of the preceding claims, wherein the ranking filtering process is a median filtering process.

**5.** The method according to any of the preceding claims, wherein the at least two data values (a[i-1], a[i], a[i+1]) in step a) comprise the given data value.

**6.** The method according to any of the preceding claims, wherein at least two first high-pass filtering processes and at least two second high-pass filtering processes are carried out.

**7.** The method according to any of the preceding claims, wherein the combination in step e) comprises an addition.

**8.** The method according to any of the preceding claims, wherein steps a) to e) are carried out for all successive data values of the intermediate sequence (a[k]).

**9.** A filter arrangement for filtering a data sequence (a[k]), comprising:

a memory arrangement (20) for storing a first data value (a[i]) of the data sequence, for storing a first group comprising at least two data values (a[i+1], a[i+2], a[i+3]) which in the data sequence (a[k]) are located ahead of the first data value (a[i]), and for storing a second group comprising at least two data values (a[i-1], a[i-2], a [i-3]) which in the data sequence (a[k]) are located after the first data value (a[i]),
a low-pass filter (10) which is fed with at least one data value of the first group and at least one data value of the second group and provides a low-pass filter value (tp[i]),
at least one first high-pass filter (21) which is fed with at least two data values of the first group and provides at least one first high-pass filter value (hp1[i]),
at least one second high-pass filter (22) which is fed with at least two data values of the second group and provides at least one second high-pass filter value (hp2[i]),
a ranking filter (40) which is fed with the at least one first high-pass filter value (hp1[i]) and the at least one second high-pass filter value (hp2[i]) and provides a ranking filter value depending on these filter values,
a combination unit (50) for combining the ranking filter value (hp[i]) with the low-pass filter value and for providing an output value (s[k]) of the filter arrangement.

**10.** The filter arrangement according to claim 9, wherein the low-pass filter (10) is fed with the given data value.

**11.** The filter arrangement according to claim 9 or 10, wherein the ranking filter (40) is fed with a constant data value in addition to the at least one first high-pass filter value (hp1[i]) and the at least one second high-pass filter value (hp2[i]).

## Revendications

**1.** Procédé destiné à générer, à partir d’une première suite de données (a’[k]) comportant une suite de valeurs de données, une deuxième suite de données (s[k]) présentant une résolution plus élevée par rapport à la première suite de données (a’[k]), lequel présente les étapes de procédé suivantes :

génération d’une suite intermédiaire (a[k]) à partir de la première suite de données (a’[k]) par insertion d’au moins une valeur intermédiaire prédéfinie entre respectivement deux valeurs de données successives de la première suite de données (a’[k]),
application d’un filtrage à la suite intermédiaire (a[k]) pour générer la deuxième suite de données, ce filtrage présentant les étapes de procédé suivantes en vue de générer une valeur de données (s[i]) de la deuxième suite de données (s[k]) :

a) application d'un filtrage passe-bas à au moins deux valeurs de données (a[i-1], a[i], a[i+1]) de la suite intermédiaire (a[k]) dont au moins une (a[i+1]) est située avant une valeur de données définie (a[i]) dans la suite intermédiaire (a[k]) et dont au moins une a[i-1]) est située après la valeur de données définie dans la suite intermédiaire (a[k]) pour délivrer une valeur de filtre passe-bas (tp[i]),
b) application d'au moins un premier filtrage passe-haut à au moins deux valeurs de données (a[i-1], a[i-3]) de la suite intermédiaire situées avant la valeur de données définie dans la suite intermédiaire (a[k]) pour délivrer au moins une première valeur de filtre passe-haut (hp1[i]),
c) application d'au moins un deuxième filtrage passe-haut à au moins deux valeurs de données (a[i+1], a [i+3]) de la suite intermédiaire situées après la valeur de données définie dans la suite intermédiaire (a[k]) pour délivrer au moins une deuxième valeur de filtre passe-haut (hp2[i]),
d) application d'un filtrage de rang au moins à l'au moins une première valeur de filtre passe-haut (hp1[i]) et l'au moins une deuxième valeur de filtre passe-haut (hp2[i]) pour délivrer une valeur de filtre de rang (hp[i]),
e) combinaison de la valeur de filtre passe-bas (tp[i]) et de la valeur de filtre de rang pour délivrer la valeur de données (s[i]) de la deuxième suite de données.

**2.** Procédé selon la revendication 1, où le filtrage de rang est appliqué à l'au moins une première valeur de filtre passe-haut (hp1[i]), l'au moins une deuxième valeur de filtre passe-haut (hp2[i]) et une valeur constante prédéfinie.

**3.** Procédé selon la revendication 2, où la valeur constante est zéro.

**4.** Procédé selon l'une des revendications précédentes, où le filtrage de rang est un filtrage médian.

**5.** Procédé selon l'une des revendications précédentes, où les au moins deux valeurs de données (a[i-1], a[i], a[i+1]) visées à l'étape a) incluent la valeur de données définie.

**6.** Procédé selon l'une des revendications précédentes, où au moins deux premiers filtrages passe-haut et au moins deux deuxièmes filtrages passe-haut sont exécutés.

**7.** Procédé selon l'une des revendications précédentes, où la combinaison visée à l'étape e) inclut une addition.

**8.** Procédé selon l'une des revendications précédentes, où les étapes de procédé a) à e) sont exécutées pour toutes les valeurs de données successives de la suite de données (a[k]).

**9.** Dispositif de filtrage destiné à filtrer une suite de données (a[k]), présentant :

un dispositif de mémoire (20) destiné à mettre en mémoire une première valeur de données (a[i]) de la suite de données, à mettre en mémoire un premier groupe comprenant au moins deux valeurs de données (a[i+1], a[i+2], a[i+3]) situées avant la première valeur de données (a[i]) dans la suite de données (a[k]), et à mettre en mémoire un deuxième groupe d'au moins deux valeurs de données (a[i-1], a[i-2], a[i-3]) situées après la première valeur de données (a[i]) dans la suite de données (a[k]),
un filtre passe-bas (10) auquel est amenée au moins une valeur de données du premier groupe et auquel est amenée au moins une valeur de données du deuxième groupe et qui délivre une valeur de filtre passe-bas (tp[i]),
au moins un premier filtre passe-haut (21) auquel sont amenées au moins deux valeurs de données du premier groupe et qui délivre au moins une première valeur de filtre passe-haut (hp1[i]),
au moins un deuxième filtre passe-haut (22) auquel sont amenées au moins deux valeurs de données du deuxième groupe et qui délivre au moins une deuxième valeur de filtre passe-haut (hp2[i]),
un filtre de rang (40) auquel sont amenées l'au moins une première valeur de filtre passe-haut (hp1[i]) et l'au moins une deuxième valeur de filtre passe-haut (hp2[i]) et qui délivre une valeur de filtre de rang en fonction de ces valeurs de filtre,
une unité de combinaison (50) destinée à combiner la valeur de filtre de rang (hp[i]) avec la valeur de filtre passe-bas et à délivrer une valeur de sortie (s[k]) du dispositif de filtrage.

**10.** Dispositif de filtrage selon la revendication 9, où la valeur de données définie est amenée au filtre passe-bas (10).

**11.** Dispositif de filtrage selon la revendication 9 ou 10, où une valeur de données constante est amenée au filtre de rang (40) en plus de l'au moins une première valeur de filtre passe-haut (hp1[i]) et de l'au moins une deuxième valeur de filtre passe-haut (hp2[i]).

FIG 1

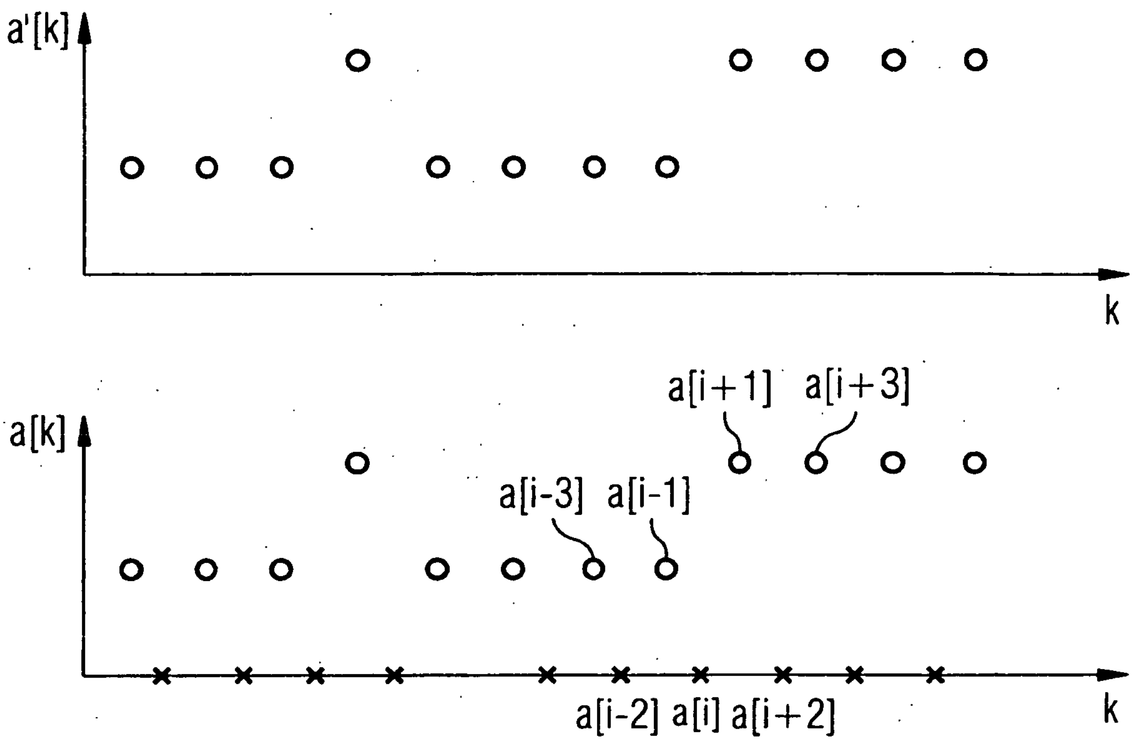

FIG 2

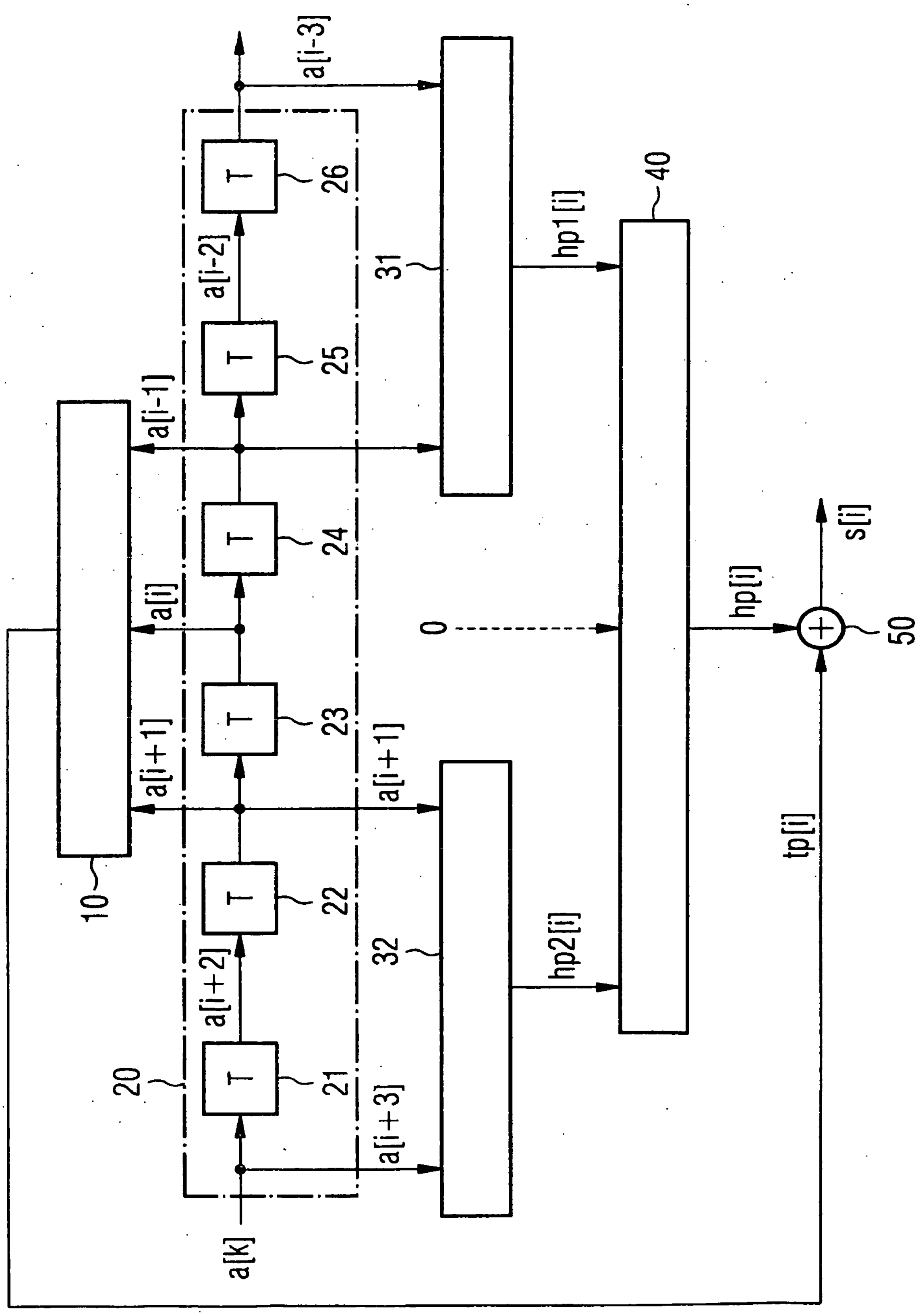
a[k]
20
T
21
a[i+2]
T
22
a[i+1]
T
23
a[i]
T
24
a[i-1]
T
25
a[i-2]
T
26
a[i-3]
10
a[i+3]
a[i+1]
32
31
hp2[i]
hp1[i]
0
40
hp[i]
50
s[i]
tp[i]

FIG 3

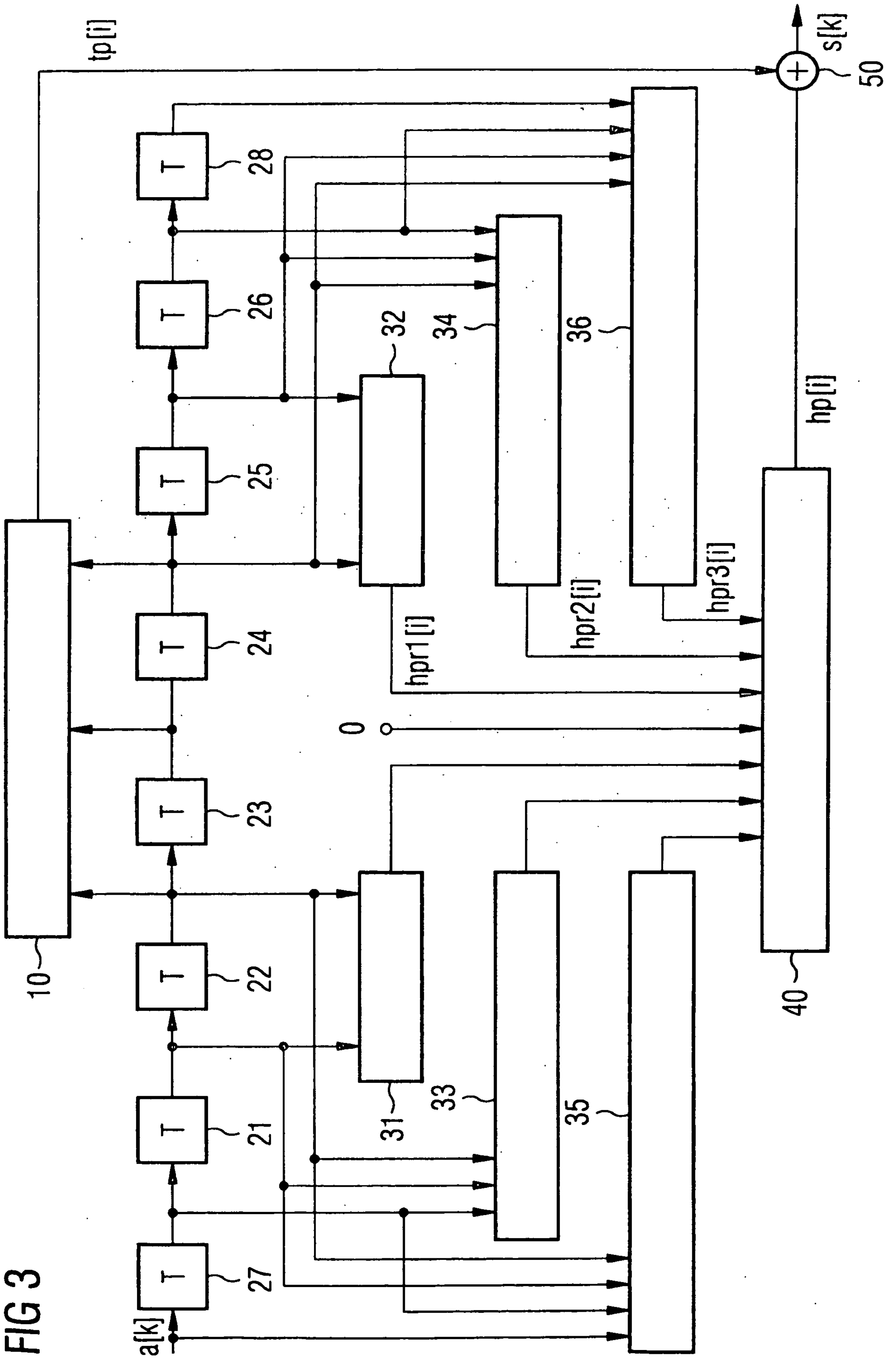
a[k]
T
27
21
22
23
24
25
26
28
10
tp[i]
31
32
33
34
35
36
hpr1[i]
hpr2[i]
hpr3[i]
0
40
hp[i]
50
s[k]

FIG 4